Europäisches Patentamt

European Patent Office

Office européen des brevets

(11) Veröffentlichungsnummer: **0 211 000 B1**

(12) **EUROPÄISCHE PATENTSCHRIFT**

(45) Veröffentlichungstag der Patentschrift:
**13.03.91 Patentblatt 91/11**

(21) Anmeldenummer: **86900070.3**

(22) Anmeldetag: **20.12.85**

(86) Internationale Anmeldenummer:
**PCT/DE85/00552**

(87) Internationale Veröffentlichungsnummer:
**WO 86/04467 31.07.86 Gazette 86/17**

(51) Int. Cl.⁵: **H02K 16/00, H02K 23/36,
H02K 7/06**

(54) **NUMERISCH GESTEUERTES ELEKTROMECHANISCHES PRÄZISIONSANTRIEBSSYSTEM.**

(30) Priorität: **15.01.85 DE 3501477
13.12.85 DE 3544669**

(43) Veröffentlichungstag der Anmeldung:
**25.02.87 Patentblatt 87/09**

(45) Bekanntmachung des Hinweises auf die
Patenterteilung:
**13.03.91 Patentblatt 91/11**

(84) Benannte Vertragsstaaten:
**AT BE CH DE FR GB IT LI LU NL SE**

(56) Entgegenhaltungen:
**CH-A- 439 467
DE-A- 3 234 673
DE-A- 3 345 528
DE-C- 169 794
DE-C- 855 785**

(56) Entgegenhaltungen:
**FR-A- 2 057 588
US-A- 2 515 565
US-A- 2 860 266
Patents Abstracts of Japan, Band 7, Nr. 20
(M-188) (1165) 26. Januar 1983 & JP, A,
57173656 (SONY) 26. Oktober 1982, siehe Zusammenfassung; Figur**

(73) Patentinhaber: **TECINSKY, Jaroslav
Knesebeckstrasse 35-37
W-1000 Berlin 12 (DE)**

(72) Erfinder: **TECINSKY, Jaroslav
Knesebeckstrasse 35-37
W-1000 Berlin 12 (DE)**

(74) Vertreter: **Wey, Hans-Heinrich, Dipl.-Ing. et al
Patentanwälte Wey & Partner
Widenmayerstrasse 49
W-8000 München 22 (DE)**

## Beschreibung

Die Erfindung betrifft ein numerisch gesteuertes elektromechanisches Präzisionsantriebssystem der im Gattungsbegriff des Hauptanspruchs angegebenen Art.

Aus der DE-OS 33 45 528 ist ein Verfahren zur Steuerung von motorbetriebenen Hochdruckventilen bekannt, bei welchen die Steuerung der Bewegung der Ventilregelachse in Abhängigkeit von laufend durchgeführten und im Ergebnis stetig angezeigten Parametern wie Druck, Temperatur, Position des Ventilkegels u.dgl. automatisch und vollelektronisch gesteuert wird. Bei einer Vorrichtung zur Durchführung dieses Verfahrens ist für die Ventilregelachse lediglich ein einzelner Verstellmotor vorgesehen. Dies hat zur Folge, daß bei Ausfall des Motors die Anlage stillgelegt werden muß.

Aus der DE-OS 29 52 695 sind ein Verfahren und eine Anordnung zur Steuerung, Überwachung und Verbrauchsmessung eines Fluiddurchflußventils bekannt geworden, bei welchen das Signal zur Steuerung der Stellung des Ventilkörpers zur Messung des das Ventil durchströmenden Fluidvolumens verwendet wird. Auch hier ist nur ein einzelner Schrittmotor vorgesehen.

Herkömmlich aufgebaute elektromechanische Antriebssysteme sind wegen der Massenträgheit relativ langsam und wenig dynamisch. Sie laufen nur schwer an und können nicht fein genug angesteuert werden. Es hat sich herausgestellt, daß mit den bekannten Ventilsteuerungen die vielseitigen Ansprüche nicht erfüllt werden können, die insbesondere in der modernen Meß-, Steuer- und Regeltechnik an große und schwere elektromechanische Antriebe gestellt werden.

Ein Präzisionsantriebssystem der eingangs genannten Art ist aus der DE-A-32 34 673 bekannt. Bei diesem bekannten System, bei dem das Gesamtdrehmoment aus der Summe der Einzeldrehmomente der Elektromotoren gewonnen wird, ist es vorgesehen, nach Erreichen der Betriebsdrehzahl einen oder mehrere Einzelmotore abzuschalten, um die Abtriebsleistung dem tatsächlichen Bedarf anzupassen. Eine gewisse Optimierung dieses bekannten Antriebssystems bezüglich Betriebsweise und Belastbarkeit wird durch eine Temperaturmessung der Einzelmotore erreicht, wobei dann, wenn eine Beschleunigung erforderlich ist, jeweils der vergleichsweise kühlste Einzelmotor zugeschaltet wird.

Nachteilig an diesem bekannten Antriebssystem ist dessen wenig kompakter Aufbau. Nachteilig ist weiterhin der relativ hohe Energieeigenverbrauch dieses bekannten System, wobei bei einem Ausfall eines Einzelmotors das gesamte System an Leistungsvermögen einbüßt. Außerdem erlaubt dieses bekannte Antriebssystem nicht den präzisen Antrieb schwerer Teile über einen großen Drehmomentbereich hinweg, und zwar in präziser Weise.

Demgegenüber liegt der Erfindung die Aufgabe zugrunde, ein numerisch gesteuertes elektromechanisches Präzisionsantriebssystem der eingangs genannten Art derart auszubilden, daß bei niedrigem Eigenverbrauch schnelle, sichere und leistungsfähige Antriebe erhalten werden, die auch schwere Teile höchst präzise in einem großen Drehmomentbereich sowie über kleinste Meßstrecken genauestens bewegen können, und zwar sowohl im Rotationsbetrieb als auch im Translationsbetrieb sowie im kombinierten Rotations/Translationsbetrieb. Außerdem soll das Präzisionsantriebssystem der eingangs genannten Art besonders kompakt ausgebildet werden.

Gelöst wird diese Aufgabe durch die kennzeichnenden Merkmale des Patentanspruchs 1. Vorteilhafte Weiterbildungen der Erfindung sind in den Unteransprüchen angegeben.

Auf diese Weise erhält man ein elektromechanisches Antriebssystem mit einem extrem günstigen Verhältnis von Drehmoment bzw. Schub- und Zugkraft zum Antriebsvolumen, das folgende Vorteile mit sich bringt :

1. kleines Volumen und damit geringes Gewicht,
2. für dieses kleine Volumen ein hohes Dreh- bzw. Schubmoment,
3. geringer Energieverbrauch,
4. sehr präzise Positionseinstellung mit entsprechender Rückmeldung und guter Reproduzierbarkeit,
5. gegen hydraulischen Antrieb sofortige Betriebsbereitschaft,
6. Anschlußmöglichkeit an einen Computer über eine standardisierte Schnittstelle.

Als Anwendungsgebiete kommen insbesondere in Frage :

Alle Arten von Ventilsteuerungen, vor allem in den Fällen, wo es auf präzise Einstellungen von Ventilen ankommt, hier also insbesondere in der chemischen Prozeßtechnik, in der Luftfahrt, Raumfahrt sowie in der Nukleartechnik, Präzisionsantriebe im allgemeinen Maschinenbau, z.B. für präzise Vorschübe bei beliebigen Translationsbewegungen wie etwa Traversierungen, oder im Bereich der CNC-Maschinen, bei Robotern und Manipulatoren, oder auch in sicherheitsrelevanten Anlagen etwa beim Antrieb von Reaktorsteuerelementen und insbesondere dort, wo eine höchste Betriebssicherheit verlangt wird und auch bei Stromausfall die Antriebe einwandfrei funktionieren sollen.

Die Erfindung wird nachstehend anhand von in der Zeichnung dargestellten Ausführungsbeispielen des Erfindungsgegenstandes näher erläutert. Es zeigen

Fig. 1 eine teilweise aufgebrochene Ansicht im Längsschnitt für Rotationsantrieb ;

Fig. 2 eine schematische Draufsicht auf das Antriebssystem ;

Fig. 3 einen Längsschnitt für Translationsbetrieb ;

Fig. 4 einen Teillängsschnitt für abwechselnden Rotations- und Translationsbetrieb ;

Fig. 5 einen Längsschnitt für gleichzeitigen Rotations- und Translationsbetrieb ;

Fig. 6 eine Ansicht von oben auf das Grundchassis ;

Fig. 7 eine Draufsicht auf den zu Fig. 6 gehörenden Deckel ;

Fig. 8 einen Schnitt gemäß Linie A-B in Fig. 7 ;

Fig. 9 eine teilweise aufgebrochene Draufsicht auf Zusammenbau von Grundchassis, Deckel und Gehäuse ;

Fig. 10 eine Ansicht des Zusammenbaus in Fig. 9 mit Motoreinheiten, Notstromversorgung und Verkabelung ;

Fig. 11 einen Teilaufbau von Grundchassis, Deckel, Motoreinheiten, Antriebselektronik und Steuerelektronik ;

Fig. 12 einen Längsschnitt durch den Aufbau der Fig. 3 mit Steuerelektronik und Verkabelung ;

Fig. 13 ein Blockdiagramm ;

Fig. 14 einen Größenvergleich der Zahnmodule ;

Fig. 15 ein Belastungsdiagramm.

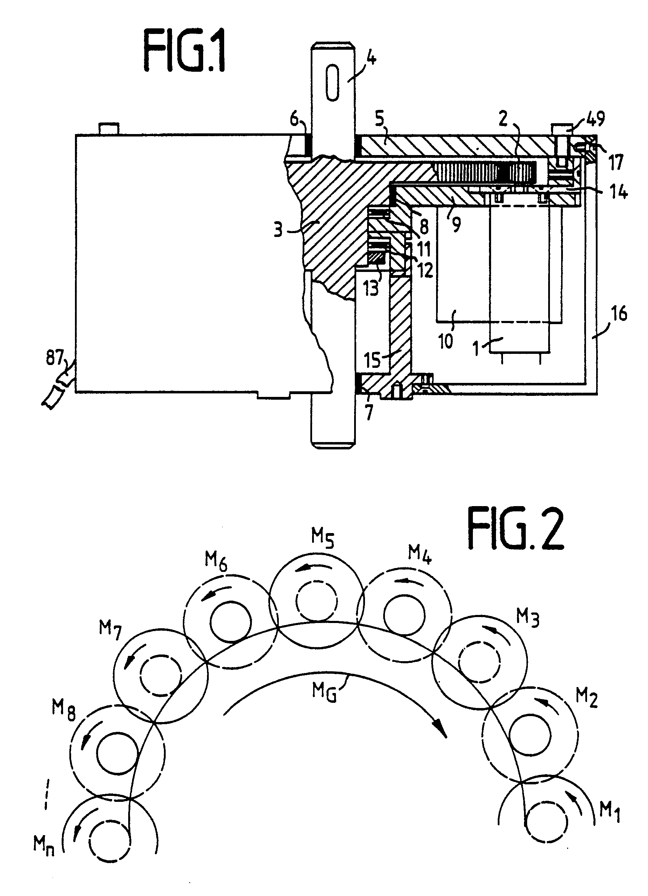

In Fig. 1 ist eine für den einfachsten Anwendungsfall, nämlich für das Rotationsprinzip, bestimmte Anordnung dargestellt.

Das Rotationsprinzip zeichnet sich dadurch aus, daß sämtliche Motor- und Motorgetriebeeinheiten 1 gleichzeitig über ihre Antriebsritzel 2 auf das Mittelzahnrad 3, das mit der Abtriebswelle 4 fest verkoppelt ist, einwirken. Die Motoreinheiten 1 sind kreisförmig um das Mittelzahnrad 3 gruppiert, so daß die Ritzel 2 nach Art von Planetenrädern mit einem Sonnenrad 3 kämmen, wobei die beiderseitigen Teilkreise einander berühren.

Diese feste Kopplung wird in Fig. 1 dadurch erreicht, daß das Mittelzahnrad 3 und die Abtriebswelle 4 einstückig sind.

Die Kraftübertragung auf andere Geräte kann auf bekannte Weise, z.B. durch Rutschkupplung, Nut und Feder, einen Keil od. dgl. erfolgen.

Die Abtriebswelle 4 ist in einem Deckel 5 mittels eines Lagers 6 sowie eines Lagers 7, welches in einer Geräteanschlußvorrichtung 15 untergebracht ist, geführt. Als Zusatzlager dient die Lagerung 8 im Grundchassis 9. Auf dem Grundchassis 9 sind zusätzlich für jeden Motor 1 Notstromversorgungen 10, die im Spannungsabfall die Antriebseinheiten 1 für bestimmte Zeit mit Energie versorgen, untergebracht.

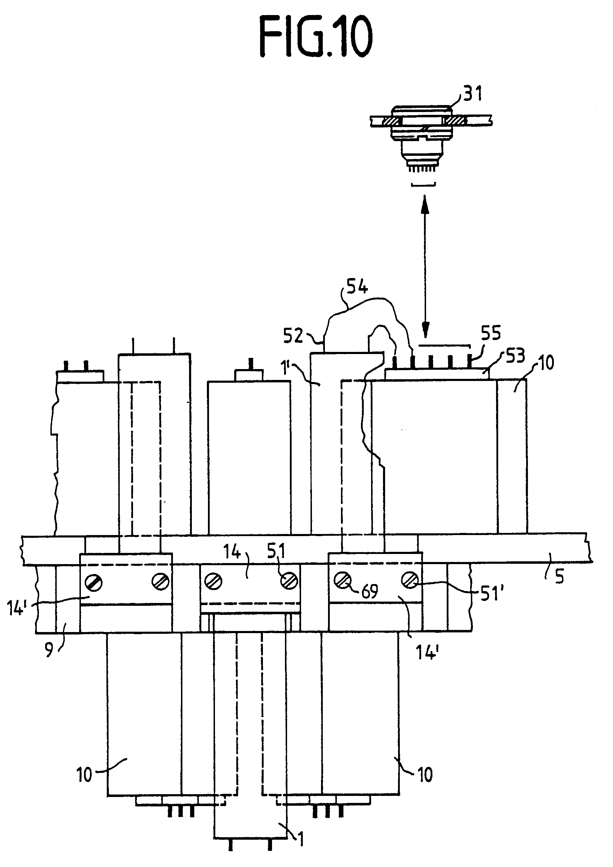

Deckel 5 und Grundchassis 9 sind durch Schrauben 49 (Fig. 9) miteinander verbunden. Die Befestigung der Motoreinheiten 1 am Grundchassis 9 erfolgt über Konsolen, die später noch beschrieben werden.

Die Abtriebswelle 4 ist im Grundchassis 9 in zwei axialen Lagern 11 und 12, z.B. Nadellagern, gelagert. Die Befestigung der Abtriebswelle 4 in dem Grundchassis 9 erfolgt durch die Sicherheitsgewindemutter 13.

Ein Gehäuse 16 umschließt die ganze Anordnung, das am Deckel 5 mittels einer Verschraubung 17 befestigt ist.

Die mechanische Anpassung an die Arbeitsmaschinen erfolgt über die Geräteanschlußvorrichtung 15 durch entsprechende Adapter, die auf die jeweils erforderliche Art angebracht werden können.

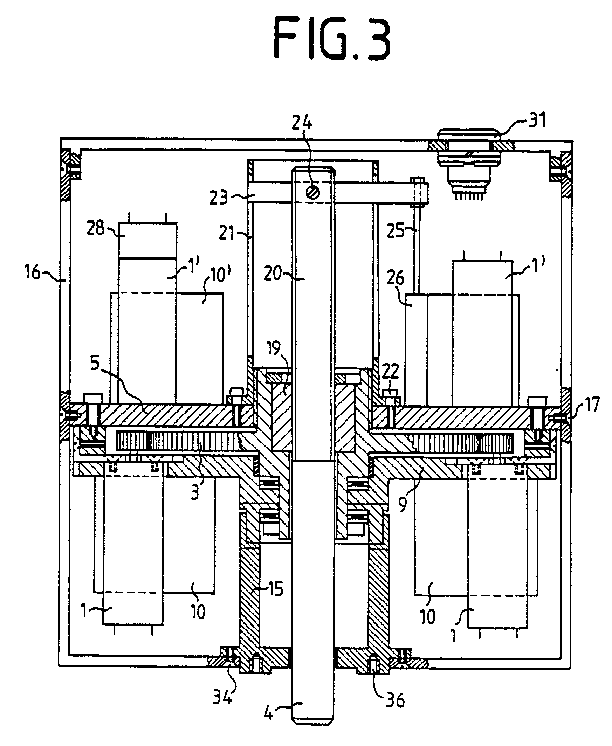

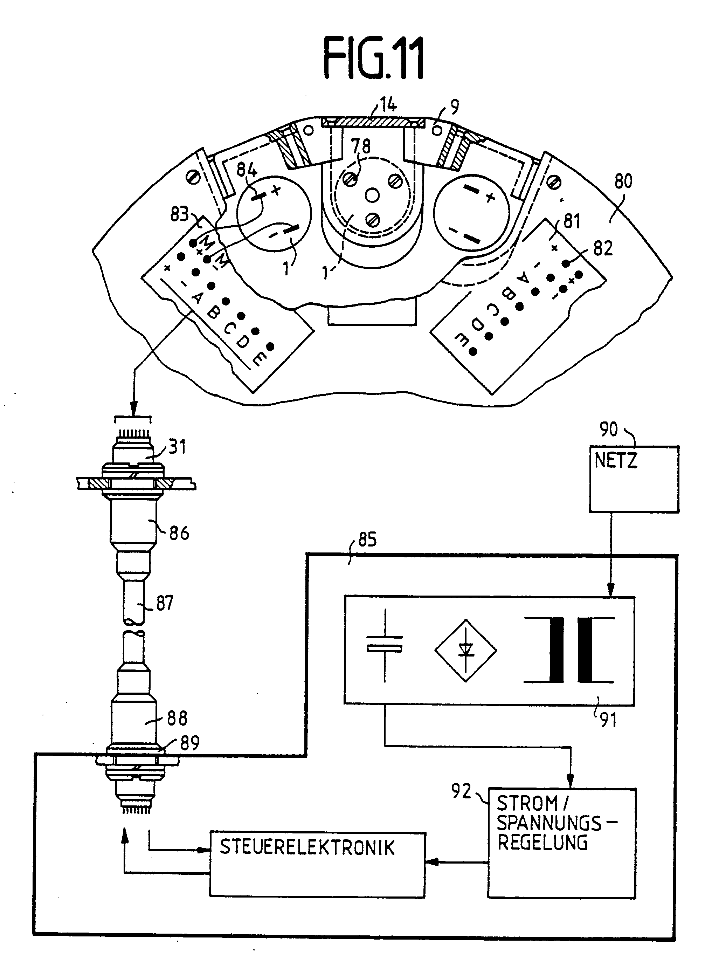

Die Energieversorgung erfolgt entweder durch ein Kabel 87 (Fig.11), das mit Kabeldurchführungen und Zugentlastung versehen ist, oder über Gerätestecker und Gerätebuchse 31 (Fig. 3).

Bei den Motoren 1 handelt es sich um Schwachstrom-Servomotore vorzugsweise mit eisenlosem Anker und permanentmagnetischem Stator.

In Fig. 2 ist schematisch die kreisförmige Anordnung der Motoreinheiten 1 und das Zusammenwirken der Planetenräder 2 mit dem Sonnenrad 3 dargestellt. Gleichzeitig ist angedeutet, daß sich ein Teil der Motoreinheiten mit den Einzel-Drehmomenten $M_1$, $M_3$, $M_5$, $M_7$ und $M_n$ auf der einen Seite des Grundchassis 9 befindet, während eine gleich große Gruppe mit den Einzel-Drehmomenten $M_2$, $M_4$, $M_6$, $M_8$ versetzt dazu zwecks Platzersparnis auf der anderen Seite bzw. auf dem zugehörigen Deckel 5 angeordnet ist.

Die nachfolgenden Ausführungsbeispiele zeigen sämtlich diese Doppelanordnung der Motoreinheiten 1 auf beiden Seiten des Grundchassis 9.

Dieser partikuläre Aufbau des "Multiantriebs" führt dazu, daß die hohe Anzahl der kleinen Drehmomente auf ein Mittelzahnrad übertragen werden kann, wobei dies über sehr feine, dem kleinen Drehmoment entsprechende Bezahnung der Ritzel und des Mittelzahnrades erfolgt, da sich die Summe der einzelnen Drehmomente erst im Mittelpunkt des großen Mittelzahnrades addiert nach der Formel

$$M_G = M_1 + M_2 + M_3 + M_4 + \ldots M_n.$$

Anhand von Fig. 3 wird erläutert, wie man vom Rotationsprinzip zum Translationsprinzip gelangt.

Im Unterschied zum Rotationsprinzip ist beim Translationsprinzip in der Nabe des Mittelzahnrades 3 ein Gewinde, eine Kugelumlaufbuchse oder ein Gewindesatellitenantrieb 19 angeordnet. Der mit dem Gewinde zusammenwirkende Teil der Abtriebswelle 4 ist als Gewindespindel 20 ausgebildet, die durch die Rotationssperrführung 21 gegen Rotation gehindert wird. Die Rotationssperrführung 21 ist fest mit dem Deckel 5 mittels der Verschraubung 22 verbunden. Die Spindel 20 wird in der Rotationssperrführung 21 durch eine Präzisionsführung 23 geführt. Sie ist mit der Spindel 20 durch eine Verschraubung 24 oder eine andere Art der Befestigung fest verbunden.

Zusätzlich wirkt diese Präzisionsführung 23 auf den Schleifer 25 eines linearen Wegegebers 26. Die abgelesene Spannung an dem linearen Wegegeber 26 ist dem Weg der Spindel 20 proportional.

An dem Grundchassis 9 sind wie auch an dem Deckel 5 die Motor- oder Motorgetriebeeinheiten 1 bzw. 1' sowie die Notstromversorgungen 10 bzw. 10' für beide befestigt.

Die Energieversorgung für die Motoreinheiten und Notstromversorgung erfolgt über eine Steckverbindung 31, die am Gehäuse 16 angebracht ist.

Das Gehäuse 16 ist sowohl an der Geräteanschlußvorrichtung 15 mit der Verschraubung 34 als auch am Deckel 5 mittels einer Verschraubung 17 befestigt.

Die Ankopplung an die Arbeitsmaschinen erfolgt so wie bei dem Rotationsprinzip mittels einer Verschraubung 36 oder über andere geeignete Adapter.

Die Position der Spindel 20 kann sowohl mit einem linearen Wegegeber 26 als auch mit einem inkrementalen Wegegeber 28, der sich direkt an den Motor- oder Motorgetriebeeinheiten 1,1' befindet, abgelesen werden.

Die Wegeaufnehmer können auf bekannte Art als induktive Wegeaufnehmer, als lineare Wegeaufnehmer, als Rotations-Wegeaufnehmer oder als inkrementale Wegeaufnehmer ausgebildet sein. Wenn die Wegeaufnehmer als Potentiometer ausgebildet sind, kann eine dem Weg proportionale Spannung abgegriffen werden. Beim Inkremental-Wegeaufnehmer werden dem Weg entsprechende Impulse gezählt und auf einer Anzeige dargestellt. Man kommt auf diese Weise zu einer Ablesegenauigkeit von $10^{-6}$.

Die Rotationssperre der Spindel 20 kann natürlich auch auf andere geeignete Weise erfolgen. So ist es z.B. möglich, das Gehäuse 16 teleskopartig auszubilden und dessen Oberteil gemeinsam mit der Spindel 20 zu verschieben, wobei die Sicherung gegen Drehung durch Paßstifte, Führungsbolzen oder ähnliche Feststellmittel zwischen dem Grundchassis 9, dem Deckel 5 und dem Oberteil des Gehäuses 16 erfolgt.

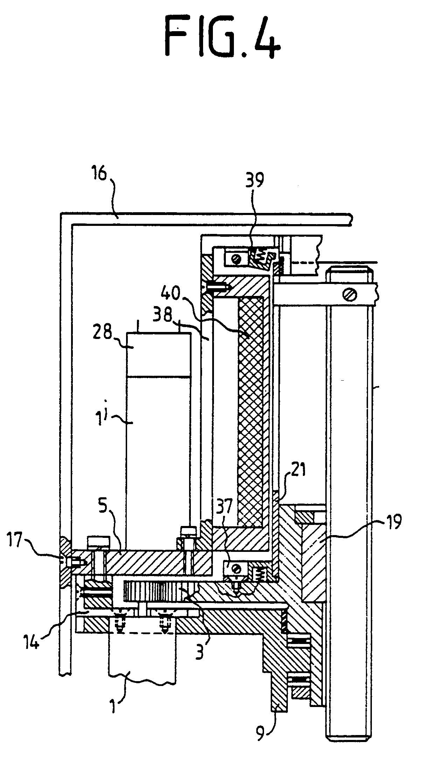

Man kann auch das Rotations- und das Translationsprinzip nacheinander anwenden, wie dies in Fig. 4 angedeutet ist.

Dieses Rotations-Translations-Prinzip beruht darauf, daß der Spindelführungszylinder 21 mit der Rotationssperre zum einen am Mittelzahnrad 3 durch eine Klemmvorrichtung 37 festgehalten wird und zum anderen beim Translationsbetrieb mit dem nicht drehenden Teil 38 des Antriebes durch eine Klemmvorrichtung 39 festgehalten wird, so daß zunächst Rotation und dann Translation erfolgt. Das Rotationsdrehmoment entspricht dem vorher beschriebenen Rotationsprinzip, ebenso wie die Schub- oder Zugkraft dem vorher beschriebenen Translationsprinzip entspricht.

Vorteilhaft ist dabei eine induktive Umschaltung vom Rotationsbetrieb zum Translationsbetrieb und umgekehrt.

Durch das Umpolen der Polarität der Gleichstromversorgung einer Induktivität 40 wird der als Anker wirkende Spindelführungszylinder 21 nach oben oder nach unten in die jeweilige Klemmvorrichtung 37 oder 39 eingepreßt. Dadurch wird der Spindelführungszylinder 21 entweder mit dem drehenden Teil, d.h. dem Mittelzahnrad 3, oder mit dem feststehenden Teil 38 verbunden. Auf diese Art und Weise entsteht die aufeinanderfolgende Rotations-Translations-Bewegung.

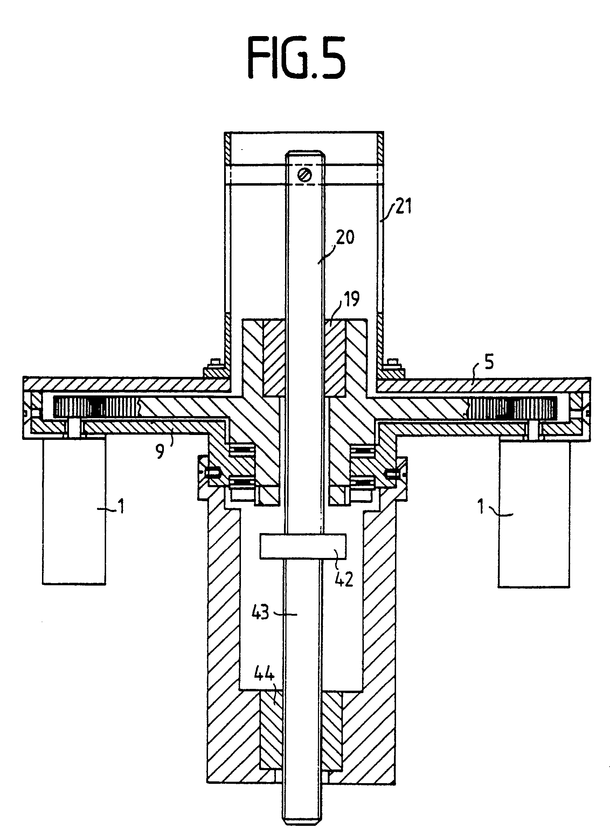

Es ist aber auch möglich, das Rotationsprinzip und das Translationsprinzip gleichzeitig anzuwenden, wie in Fig. 5 gezeigt.

Bei gleichzeitiger Rotations-Translations-Bewegung wirkt die Spindel 20, die in der Kugelumlaufbuchse 19 über eine Kupplung 42 geführt wird, auf eine weitere Spindel 43, die in einer weiteren Kugelumlaufbuchse 44 geführt wird, ein. Die Rotation der Spindel 20 wird durch die Rotationssperrführung 21 verhindert, so daß die Spindel 20 eine Translationsbewegung beschreibt. Dadurch, daß die Spindel 43 nicht mit der Spindel 20 gekoppelt ist, jedoch sich in einer Kugelumlaufbuchse 44 befindet, die eine bestimmte Steigung besitzt, beschreibt die zusätzliche Spindel 43 eine gleichzeitige Rotations-Translations-Bewegung.

Die Translationsgeschwindigkeit entspricht der Drehzahl der Motorgetriebeeinheiten 1 und der Steigung der Kugelumlaufbuchse 19.

Die Translations-Rotationsbewegung der Spindel 43 setzt sich aus der Bewegung der vorher beschriebenen Bewegung der Spindel 20 und der Steigung der Kugelumlaufbuchse 44 zusammen.

Die beiden Spindeln 20 und 43 sind nicht fest, sondern gleitend miteinander gekoppelt. Dazwischen können sich Nadellager befinden oder man kann die Verbindung mit einer Rutschkupplung 42, deren übertragungsdrehmoment variabel eingestellt werden kann, versehen. Auch andere auf dem Markt befindliche Kupplungen sind nach Bedarf verwendbar.

Die Befestigungsart dieses Antriebes an die Arbeitsmaschinen kann ebenfalls nach den vorher beschriebenen Prinzipien erfolgen.

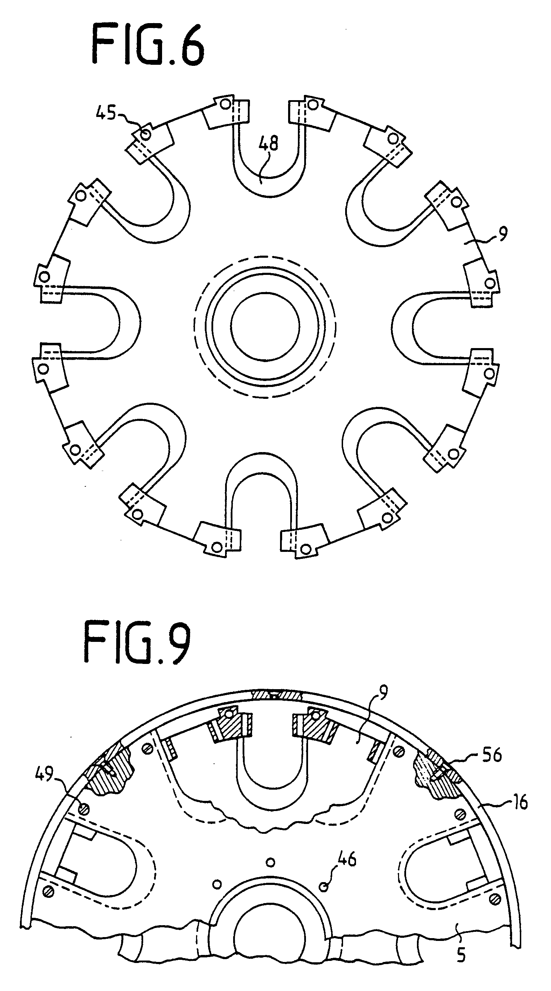

Die Fig. 6 stellt das Grundchassis 9 in der Draufsicht dar. Das Grundchassis ist das tragende Element für den Gesamtaufbau. In dieses Grundchassis 9 werden sowohl Motor- oder Motorgetriebeeinheiten 1 als auch die gesamten Kraftübertragungselemente (Ritzel 2, Zahnrad 3, Kugelumlaufspindel 19 und Abtriebswelle 4) integriert.

Das Grundchassis ist das einzige tragende Element, das über die Geräteanschlußrorrichtung 15 mit sämtlichen Arbeitsmaschinen aus den verschiedensten Anwendungsbereichen gekoppelt werden kann.

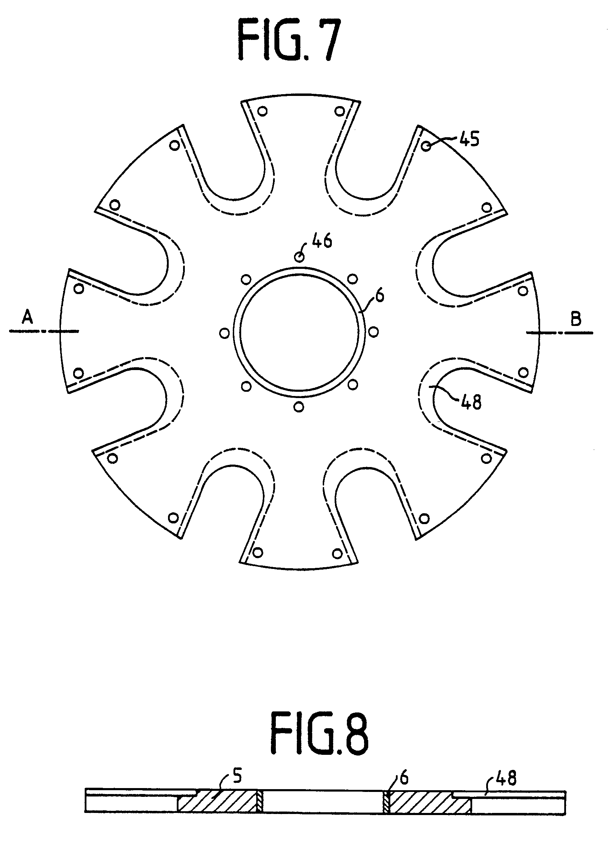

Die Fig. 7 stellt den Deckel 5 des Grundchassis 9 dar. Der Deckel 5 ist mit Durchgangsbohrungen 45 für die spätere Befestigung am Grundchassis 9 mittels Schrauben 49 versehen.

Zusätzlich sind Bohrungen 46 mit Gewinde für die Rotations-Sperrführung 21 und das Lager 6 vorgesehen. Außerdem ist der Deckel mit Führungen 48 für die Motor- oder Motorgetriebe-Befestigungskonsolen 14 versehen.

Fig. 8 ist ein Schnitt A-B durch die Vorderansicht des Deckels 5 mit dem Lager 6. Gleichzeitig sind die Führungen 48 für die Motor- oder Motorgetriebeeinheiten 1 ersichtlich.

Fig. 9 stellt eine Draufsicht auf den Zusammenbau des Grundchassis 9, des Deckels 5 sowie des Gehäuses 16 ohne Motorgetriebeeinheiten dar.

Der Deckel 5 wird am Grundchassis 9 durch Schrauben 49 festgeschraubt, das Gehäuse 16 wird durch Schrauben 56 an dem Deckel 5 entsprechend befestigt.

In Fig. 10 ist eine Vorderansicht von einem Teil des Grundchassis 9 mit auf den Befestigungskonsolen 14 angebrachten Motor- oder Motorgetriebeeinheiten 1 und des Deckels 5 mit auf den Konsolen 14' angebrachten Motor- oder Motorgetriebeeinheiten 1' dargestellt.

Zusätzlich befinden sich auf dem Grundchassis 9 die Notstromversorgungen 10 bzw. 10' auf dem Deckel 5.

Die Motor- oder Motorgetriebeeinheiten 1 bilden mit den Befestigungskonsolen 14 einen Einschub in die Chassisebene und werden durch die Verschraubung 51 am Grundchassis 9 festgeschraubt. Sie bilden mit den Befestigungskonsolen 14 einen Einschub, der in den Chassisdeckel 5 geführt wird, aber an dem Grundchassis durch die Verschraubung 51' befestigt ist.

Die Motor- oder Motorgetriebeeinheiten 1, 1' werden an eine Antriebselektronik mit integrierter Notstromversorgung 10, 10' angeschlossen. Dies geschieht, indem man die Motorpole 52 mit den auf der Steuerelektronik mit integrierter Notstromversorgung befindlichen Kontakten 55 auf der Lötleiste 53 anschließt. Dies ist durch die Verdrahtung 54 gegeben.

In Fig. 11 ist die Anordnung aller Bauelemente in der Draufsicht dargestellt, wobei gleichzeitig die Steuerelektronik 85 und deren Anschluß an die Steckerbuchse 31 angedeutet sind. Auf dem Grundchassis 9 befinden sich auf Befestigungskonsolen 14 die angebrachten Motor- oder Motorgetriebeeinheiten 1, die mit den Befestigungskonsolen durch Verschraubungen 78 befestigt sind. Dort sind ebenfalls die Motorgetriebeeinheiten 1 in einem bestimmten Winkel, der sich nach der Anzahl der Motor- oder Motorgetriebeeinheiten richtet, versetzt angebracht.

Auf dem Deckel 5 befindet sich die Antriebselektronik 81 mit der integrierten Notstromversorgung 10', die mit einer Lötstiftleiste 82 versehen ist. Die Lötstifte + / – und A bis E werden mit der Steckerbuchse 31 elektrisch verbunden. Die Kontakte M + / M – werden durch die Verkabelung 83 mit den Motorpolen 84 elektrisch verbunden.

Die Verbindung mit der Steuerelektronik 85 erfolgt durch einen Gerätestecker 86 und ein Kabel 87, das andererseits mit einem Gerätestecker 88 versehen ist. Der Gerätestecker 88 ist mit der Einbaugerätedose 89 gekoppelt. Dadurch ist die Datenübertragung von der Steuerelektronik 85 an die Antriebselektronik 81 gegeben. Die Steuerelektronik wird vom Netzanschluß 90 über einen nicht stabilisierten Netzteil 91 und über die Stromspannungsregelung 92 mit einer stabilisierten Spannungsversorgung versorgt.

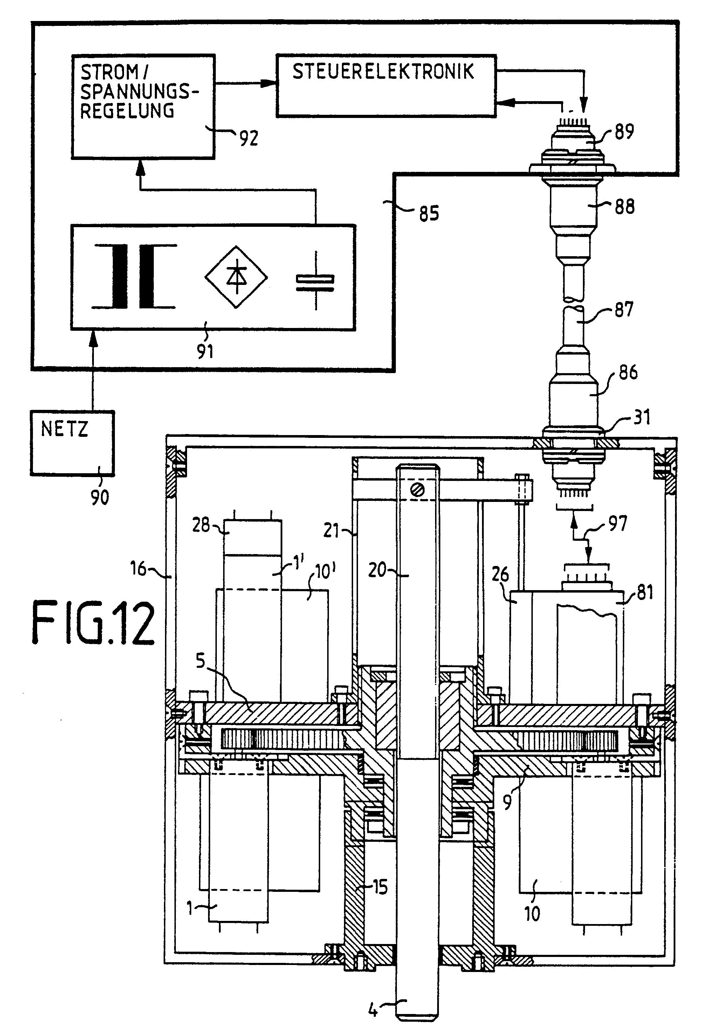

Fig. 12 stellt den Anschluß des numerisch gesteuerten elektromechanischen Präzisionsantriebssystems an die Steuerelektronik 85 dar. Die Steuerelektronik 85 wird über eine Einbaugerätedose 89, den Kabelstecker 88 und den Kabelstecker 86 an die Steckerbuchse 31 angeschlossen.

Die Steckerbuchse 31 wird mit der Antriebselektronik 81 über ein Kabel 97 elektrisch verbunden.

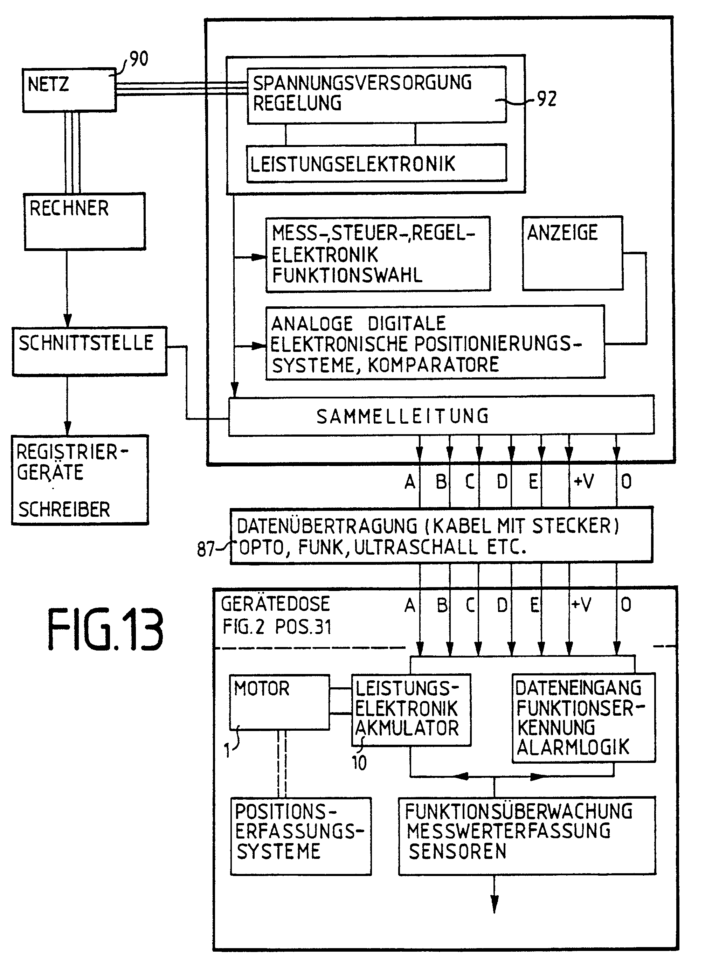

In dem Blockdiagramm der Fig. 13 ist der Zusammenhang der elektronischen Baugruppen veranschaulicht. Einzelheiten ergeben sich aus der DE-OS 33 45 528.

Hier sind auch Einzelheiten über den Aufbau und die Wirkungsweise der Steuerelektronik 85 angegeben. Diese Steuerung ist ebenso wie diejenige gemäß DE-OS 33 45 528 computer- und "CAMAC"-kompatibel.

Das Prinzip der Erfindung beruht u.a. darauf, daß ein einzelner Stellmotor, sei es ein normaler Elektromotor, sei es ein Schrittschaltmotor, durch eine Vielzahl kleiner Schwachstrommotore ersetzt wird.

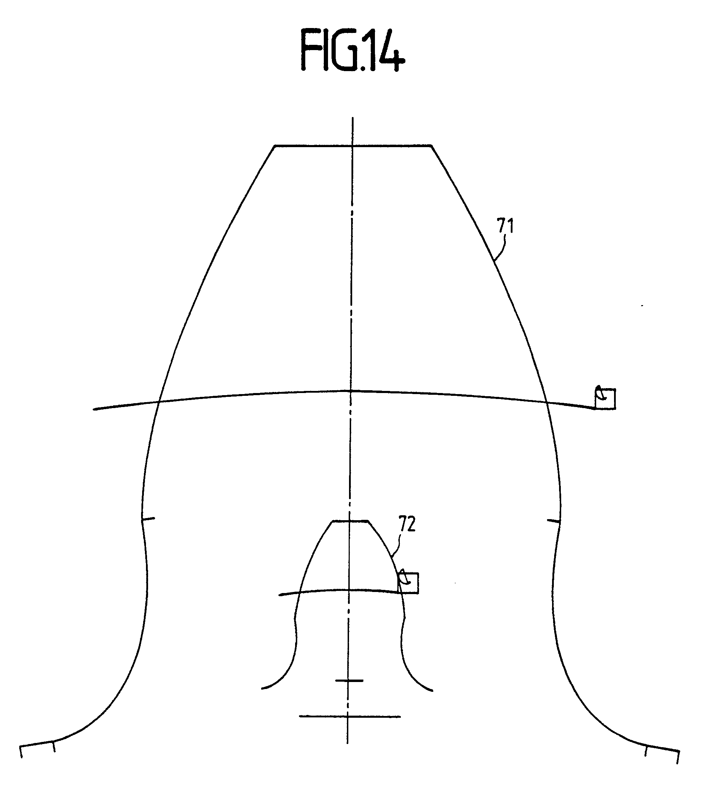

Fig. 14 zeigt den Unterschied zwischen dem Modul m der Verzahnung bei Verwendung nur einer -wie bekannt- oder einer Vielzahl von Motor- oder Motorgetriebeeinheiten.

Bei dem dargestellten Beispiel sei ein Drehmoment von 200 Nm mit entsprechender Schubkraft gefordert.

```
Bei Verwendung eines einzigen Antriebes beträgt
der Durchmesser des Mittelzahnrades 3        389,888 mm,
der Durchmesser der Ritzel 2            `       54,000 mm
bei einem Achsenabstand von                  443,000 mm.
Das entspricht einem Modul 71      m = 3.


Bei 16 Antrieben 1, 1' beträgt dagegen
der Mittelzahnrad-Durchmesser nur            103,970 mm,
derjenige der Ritzel nur                      14,400 mm.
Das entspricht einem Modul 72      m = 0,8.
```

Man erhält also zu den anderen bereits erörterten Vorteilen eine erhebliche Reduzierung des Raumbedarfs bei gleicher Leistung, ganz abgesehen von verringertem Schlupf, dementsprechend weniger Totzeiten und einer entsprechend größeren Dynamik des Systems.

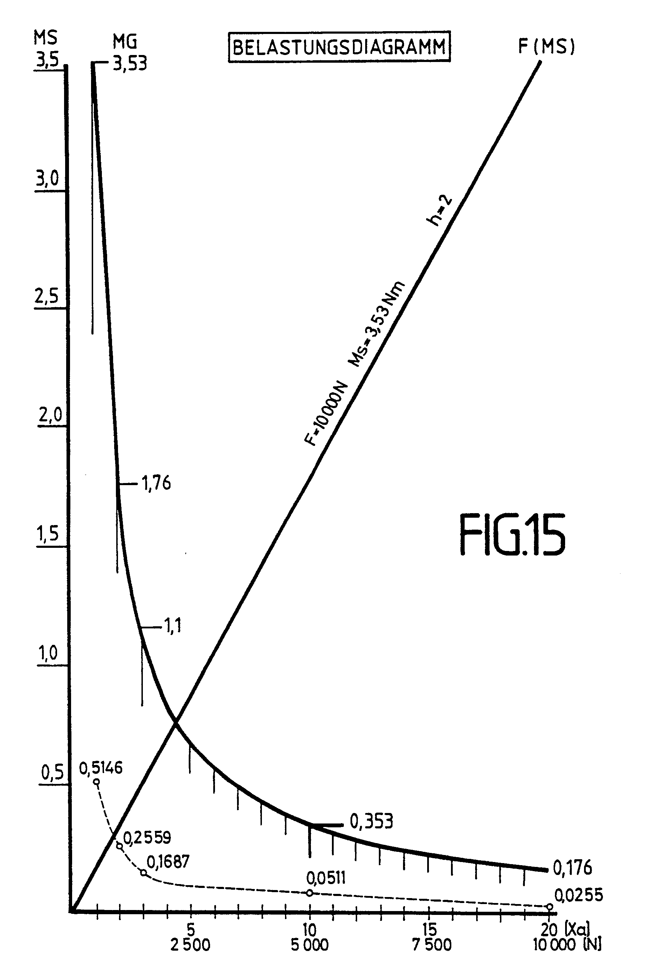

In Fig. 15 ist ein Belastungsdiagramm aufgezeichnet. Das Belastungsdiagramm MS/MG ist eine graphische Darstellung des proportional ansteigenden Drehmoments MS am Sonnenrad 3 zur ansteigenden Belastung F(Nm) an der Abtriebswelle 4 bzw. der Kugelumlaufspindel 20.

Wenn

MS das geforderte Gesamtdrehmoment (Sonnenrad),

MG das geforderte Drehmoment an der Abtriebswelle (Ritzel) des partikulären Antriebes (Motoreinheit),

Xa die Anzahl der Partikularantriebe (z.B.16) ist, dann ist

$$MG = 1/Xa. \; MS.$$

Die Kurve MG in dem Belastungsdiagramm stellt den Verlauf des geforderten Drehmoments bei der Verwendung von mehreren Partikularantrieben dar. Es ist aus der Formel ersichtlich, daß die Kurve MG hyperbolisch verläuft, d.h. daß auch die Belastung des Partikularantriebes hyperbolisch abnimmt. Außerdem geht aus der MG-Kurve hervor, daß sie bei dem Wert Xa = 10 einen linearen Verlauf annimmt. Dies ist auch der Bereich, wo Partikularantriebe nicht mehr maximal ausgelastet werden müssen (Sicherheitsbereich).

Das interessante Phänomen dieses Antriebes ist, daß das dynamische Verhalten des gesamten Antriebes dem dynamischen Verhalten des Partikularantriebes entspricht, d.h., daß das Rotorträgheitsmoment $(kgm^2)$ des gesamten Antriebes dem Rotorträgheitsmoment des Partikularantriebes entspricht, wobei natürlich das Trägheitsmoment des Sonnenrades 3 zu berücksichtigen wäre.

Die Kurve F(MS) beweist, daß sich das Gesamtdrehmoment im Verhältnis zu der Last proportional verhält. Das geforderte

Drehmoment an dem Partikularantrieb sinkt mit dem Übersetzungsverhältnis i, dementsprechend proportional sinkt auch die Drehzahl (Upm) an der Abtriebswelle des Antriebssystems.

Bei 16 Partikularantrieben, d.h. bei Xa = 16, werden im dargestellten Beispiel die Antriebe mit nur etwa 32% belastet. Daraus ergibt sich, daß bei Ausfall von über 60% die Funktionsfähigkeit dieses Antriebssystems voll gewährleistet bleibt. Bei einem Ausfall von 60% eines konventionellen Antriebes ist die Funktion dagegen nicht mehr gewährleistet.

Dadurch, daß sich die Kräfte auf den gesamten Umfang des Mittelzahnrades oder Sonnenrades 3 verteilen, sinkt auch die mechanische Beanspruchung der Verzahnung.

Bei einem praktischen Ausführungsbeispiel mit einer Belastung F = 10.000 N entsprechend der Kurve F(MS) bei 16 das Sonnenrad 3 umgebenden Schwachstrom-Servomotoren 1,1' benötigen diese jede eine Leistung von 12 V. 1,1 A = 13,2 W, d.h. alle 16 zusammen eine Leistung von 211,20 W.

Wenn das Mittelzahnrad einen Durchmesser von 80 mm, die Ritzel 2 einen Durchmesser von 12 mm, die Welle 4 bzw. Spindel 20 einen Durchmesser von 28 mm und eine Länge von 70 mm haben, dann kann mit dieser außerordentlich geringen Leistung bei einem Schubweg von 20 mm eine Schubkraft von etwa 10.000 Nm erzielt werden. Dabei ist die Präzision der Steuerung zwischen Drehzahlen von 0,1 bis 30.000 pro Minute regelbar.

Zielsetzung bei der Entwicklung dieses neuartigen numerisch gesteuerten elektromechanischen Präzisionsantriebssystems war es, die neutralen Zonen und weitere Parameter, die bei einem konventionellen Elektroantrieb sehr hoch sind, auf einen möglichst niedrigen Wert zu reduzieren.

Dieser Effekt wird dadurch erreicht, daß man das gewünschte Drehmoment (MS in Nm) der konventionellen Elektromotore durch partikuläre Antriebe mit dem Drehmoment $M_n$ ersetzt und sie über Ritzel (Planeten) auf das Mittelzahnrad (Sonnenrad) gleichzeitig einwirken läßt.

Dadurch erhöht sich das dynamische Verhalten und das Anlaufdrehmoment, wobei der Energieverbrauch im Leerlauf auf ein Minimum sinkt. Das Verhältnis Volumen zur abgegebenen Leistung und der Wirkungsgrad steigen beträchtlich.

Bei der Verwendung von Servomotoren mit eisenlosem Anker (sogen. Glockenanker oder Trommelanker) als Partikularantriebe ist auch das Verhältnis Volumen zu Gewicht und Leistung wesentlich günstiger als bei konventionell aufgebauten elektromechanischen Antrieben. Der aus Dynamoblechen zusammengesetzte Anker ist schwer und daher beim Anlaufen sehr langsam. Das Rotorträgheitsmoment ($kgm^2$) und die mechanische Zeitkonstante (ms) sind relativ groß.

Dabei ist das Erreichen dieser Geschwindigkeiten durch das Rotor-Massen-Trägheitsmoment sehr beeinträchtigt. Z.B. ist es bei konventionellen Motoren in diesem Leistungsbereich nur möglich, Drehzahlen im 100 ms-Bereich zu erreichen. Mit dem vorgeschlagenen Antrieb ist es jedoch möglich, diese Drehzahl mit einem 80% geringeren Zeitaufwand zu erreichen.

Das Gleiche gilt für die Antriebsdynamik, d.h. für das schnelle Anfahren, Umschalten u. dgl.. Hierdurch wird auch ein wesentlich schnellerer Reversantrieb erreicht ; z.B. würde bei Verwendung eines einzigen Antriebes der Reversbetrieb 130 ns erfordern. Bei Verwendung dieses neuen Antriebes würde der Reversbetrieb etwa 20 bis 30 ns betragen. Diese Werte beziehen sich auf Standarddioden in der Steuer- und Antriebselektronik. Durch Verwendung von speziellen elektronischen Bauelementen kann man noch bessere Regelungswerte erzielen.

Zusammenfassend ist festzustellen :

Die kleine mechanische Zeitkonstante (ms),

das geringe Rotorträgheitsmoment ($kgm^2$),

der geringe Schlupf und daher auch die

extrem niedrige Totzeit (ms)

des beschriebenen Antriebssystems sind die entscheidenden Faktoren, die das dynamische Verhalten gegenüber den konventionellen elektromechanischen Antrieben im wesentlichen positiv unterscheiden.

Daher lassen sich durch dieses neue Präzisionsantriebssystem sehr schnelle Steuer- und Regelprozesse durchführen.

Durch das additive Ansteuern der Partikularantriebe erhält man der Anzahl Xa der Antriebe entsprechend viele Leistungsstufen. Es läßt sich infolge seines spezifischen mechanischen Aufbaus stufenlos regeln. Durch die Zeitkonstanten geschieht die Positionierung, Drehzahlregelung, Zug- oder Schubgeschwindigkeit (bzw. Zug- oder Schubkraft) problemlos und absolut präzise.

Die niedrige Leistungsaufnahme der Schwachstrommotoren ermöglicht den Batteriebetrieb (Notstromaggregate), was natürlich für Sicherheitsbereiche sowie Bereiche, wo sich Menschen im direkten Kontakt mit gefährlichen Medien befinden, von großer Bedeutung ist. Somit ist es immer möglich, daß bei Ausfall der Computersteuerelektronik, Kabelbruch, Explosion etc. z.B. Hochdruckventile im Sicherheitsbereich doch noch einen definierten und vorher programmierten Zustand erreichen.

Das Gleiche gilt für andere der genannten Anwendungsgebiete.

Abschließend sei nochmals darauf hingewiesen, daß dieser neue Multiantrieb seine Vorteile darauf gründet, daß das Drehmoment und damit auch die Schub- oder Zugkraft an der Gewindespindel am Mittelzahnrad durch die Anzahl der Einzelantriebe und somit auch der kleinen Drehmomente bestimmt wird, wobei die Dynamik des Multisystems nicht beeinträchtigt wird.

Auf diese Weise entsteht ein "n-Phasen-Multiantrieb", der sehr leistungsfähig, schnell, leicht und klein in der Abmessung ist, so daß auch das Verhältnis Volumengewicht zur Leistung sehr günstig wird.

## Ansprüche

1. Numerisch gesteuertes elektromechanisches Präzisionsantriebssystem, bei dem die Abtriebswellen (4) von mit eigener Spannungsversorgung versehenen Elektromotoren (1) Ritzel (2) aufweisen, die mit einem in einem gemeinsamen Gehäuse (16) untergebrachten Mittelzahnrad (3) kämmen, das in seiner Mitte eine parallel zu den Motorwellen angeordnete Arbeitsspindel (20) für die anzutreibenden Teile enthält, wobei Steuerimpulse von den anzutreibenden Teilen zugeordneten Parametern bestimmt sind, wobei die Elektromotore (1) mittels einer Antriebselektronik unabhängig voneinander synchron gesteuert sind, und wobei sich die Summe der Einzeldrehmomente in der Arbeitsspindel (20) des Mittelzahnrades (3) addiert und ein Multidrehmomentantrieb entsteht, der eine Rotations- und/oder Translationsbewegung der Arbeitsspindel bewirkt, dadurch gekennzeichnet,

a) daß die Elektromotore nahezu trägheitslose Schwachstromservomotore (1, 1') mit kleinen Einzeldrehmomenten sind,

b) daß die Servomotore (1, 1') mit der zugehörigen Antriebselektronik (81) einschließlich Notstromaggregaten (10, 10') jeweils zu einer Einheit verbunden sind,

c) daß die Ritzel (2, 2') als Planetenräder und das Mittelzahnrad als Sonnenrad ausgebildet sind, wobei die Drehmomentübertragung von den Ritzeln (2, 2') auf das Mittelzahnrad (3) über sehr feine, dem kleinen Drehmoment entsprechende Bezahnung der Ritzel und des Mittelzahnrads erfolgt, und

d) daß die Motore (1, 1') auf beiden Seiten der Ebene des Mittelzahnrads (3) versetzt angeordnet sind.

2. Numerisch gesteuertes elektromechanisches Präzisionsantriebssystem nach Anspruch 1, dadurch gekennzeichnet, daß die Servomotore (1, 1') als hochüberlastbare Motore mit eisenlosem Anker und Permanentstator ausgebildet sind.

3. Numerisch gesteuertes elektromechanisches Präzisionsantriebssystem nach Anspruch 1, dadurch gekennzeichnet, daß bei Rotationsbewegung das Mittelzahnrad (3) mit der als Abtriebswelle (4) wirkenden Arbeitsspindel einstückig ist.

4. Numerisch gesteuertes elektromechanisches Präzisionsantriebssystem nach Anspruch 1, dadurch gekennzeichnet, daß bei Translationsbewegung die Nabe des Mittelzahnrades (3) und die Arbeitsspindel (20) über ein Gewinde (19) miteinander verbunden sind.

5. Numerisch gesteuertes elektromechanisches Präzisionsantriebssystem nach Anspruch 4, dadurch gekennzeichnet, daß das Gewinde (19) eine Kugelumlaufspindel mit Kugelumlaufbüchse oder ein Satellitengetriebe ist.

6. Numerisch gesteuertes elektromechanisches Präzisionsantriebssystem nach einem der Ansprüche 1 bis 5, dadurch gekennzeichnet, daß die Motorwellen bzw. die zugehörigen Ritzel (2, 2') kreisförmig in gleichen Abständen voneinander um die Arbeitsspindel (20) des Mittelzahnrades (3) angeordnet sind, wobei die Teilkreise der Antriebsritzel und des Mittelzahnrades sich berühren.

7. Numerisch gesteuertes elektromechanisches Präzisionsantriebssystem nach Anspruch 1, dadurch gekennzeichnet, daß das Mittelzahnrad (3) in einem mit dem gemeinsamen Gehäuse (16) verbundenen Grundchassis (9) vorzugsweise in Nadellagern axial gelagert ist.

8. Numerisch gesteuertes elektromechanisches Präzisionsantriebssystem nach Anspruch 1, dadurch gekennzeichnet, daß das Mittelzahnrad (3) radial in einer Geräte-Anschlußeinrichtung (15) und in einem Deckel (5) zum Grundchassis (9) gelagert ist.

9. Numerisch gesteuertes elektromechanisches Präzisionsantriebssystem nach Anspruch 1, dadurch gekennzeichnet, daß bei Translationsbewegung der Arbeitsspindel (20) deren Rotation durch eine Rotationssperre (21) verhindert wird.

10. Numerisch gesteuertes elektromechanisches Präzisionsantriebssystem nach Anspruch 1, dadurch gekennzeichnet, daß bei gleichzeitiger Rotations- und Translationsbewegung die Arbeitsspindel (20) aus zwei Teilen besteht, die über eine Rutschkupplung (42) gleitend miteinander verbunden sind.

## Claims

1. A numerically-controlled electromechanical precision drive system, in which the driven shafts (4) of electromotors (1) provided with their own voltage supply have pinions (2), which engage with a central gear wheel (3) accommodated in a common housing (16) and containing in its centre a main spindle (20), arranged parallel to the motor shafts, for the parts to be driven, wherein control pulses are determined by parameters allocated to the parts to be driven, wherein the electromotors (1) are controlled synchronously independently of each other by means of a drive electronic system, and wherein the sum of the individual torques in the main spindle (20) of the central gear wheel (3) is added up and a multi-torque drive is produced, which effects a rotational and/or translatory motion of the main spindle, characterised

a) in that the electromotors are almost inertialess weak current servomotors (1, 1'), with low individual torques,

b) in that the servomotors (1, 1') are each connected, with the associated drive electronic system (81) including emergency power units (10, 10') into a unit,

c) in that the pinions (2, 2') are designed as planet pinions and the central gear wheel as a sun wheel, wherein the torque transfer from the pinions (2, 2') to the central gear wheel (3) occurs by way of very fine toothing of the pinions and of the central gear wheel, corresponding to the low torque and

d) in that the motors (1, 1') are arranged offset on both sides of the plane of the central gear wheel (3).

2. A numerically-controlled electromechanical precision drive system according to claim 1, characterised in that the servomotors (1, 1') are designed as motors of high overload capacity with a coreless armature and a permanent stator.

3. A numerically-controlled electromechanical precision drive system according to claim 1, characterised in that with rotational motion the central gear wheel (3) is in one piece with the main spindle acting as a driven shaft (4).

4. A numerically-controlled electromechanical precision drive system according to claim 1, characterised in that with translatory motion the hub of the central gear wheel (3) and the main spindle (20) are connected to each other by way of a screw thread (19).

5. A numerically-controlled electromechanical precision drive system according to claim 4, characterised in that the screw thread (19) is a recirculating ball screw with a recirculating ball bush or a satellite gear unit.

6. A numerically-controlled electromechanical precision drive system according to one of claims 1 to 5, characterised in that the motor shafts or the associated pinions (2, 2') are arranged in a circle at equal distances from each other around the main spindle (20) of the central gear wheel (3), wherein the part-circles of the driving pinions and of the central gear wheel touch.

7. A numerically-controlled electromechanical precision drive system according to claim 1, characterised in that the central gear wheel (3) is axially mounted in a base chassis (9) connected to the common housing (16), preferably in needle bearings.

8. A numerically-controlled electromechanical precision drive system according to claim 1, characterised in that the central gear wheel (3) is mounted radially in an apparatus connecting device (15) and in a cover (5) to the base chassis (9).

9. A numerically-controlled electromechanical precision drive system according to claim 1, characterised in that with translatory motion of the main spindle (20) its rotation is prevented by a rotational blocking mechanism (21).

10. A numerically-controlled electromechanical precision drive system according to claim 1, characterised in that with simultaneous rotational and translatory motion the main spindle (20) consists of two parts, which are connected to each other so that they can slide, by way of a slipping coupling (42).

## Revendications

1. Système d'entraînement électromécanique de précision à commande numérique, dans lequel il est associé, à l'arbre de sortie (4), des pignons (2) appartenant à des moteurs électriques (1) pourvus d'une alimentation propre en courant, ces pignons (2) engrenant avec une roue dentée centrale (3) qui est disposée dans un boîtier commun (16) et à laquelle est associé, en son centre, un arbre moteur (20) disposé parallèlement aux arbres des moteurs et prévu pour les éléments à entraîner, des impulsions de commande étant produites à partir de paramètres liés à ces éléments à entraîner, les moteurs électriques (1) étant commandés, de manière synchrone et d'une façon indépendante les uns des autres, à l'aide d'un dispositif électronique de commande et la somme des couples individuels de rotation se réalisant dans l'arbre moteur (20) de la roue dentée centrale (3), pour donner un couple multiple de rotation, servant à l'entraînement, qui entraîne un mouvement de rotation et/ou de translation de cet arbre moteur, caractérisé :

a) en ce que les moteurs électriques sont des servomoteurs à courant faible (1, 1') pratiquement sans inertie et à faible couple individuel de rotation,

b) en ce que chacun de ces servomoteurs (1, 1') forme un ensemble unitaire avec le dispositif électronique de commande (81) qui lui est associé, y compris son alimentation de secours (10, 10'),

c) en ce que les pignons (2, 2') sont réalisés sous la forme de roues planétaires et la roue dentée centrale, sous la forme d'une roue solaire, la transmission de couple de rotation des pignons (2, 2') à la roue dentée centrale (3) s'effectuant par l'intermédiaire de dentures très fines, correspondant au faible couple de rotation, de ces pignons et de cette roue dentée centrale, et

d) en ce que les moteurs (1, 1') sont disposés d'une manière décalée de part et d'autre du plan de la roue dentée centrale (3).

2. Système d'entraînement électromécanique de précision à commande numérique suivant la revendication 1, caractérisé en ce que les servomoteurs (1, 1') sont réalisés sous la forme de moteurs à possibilité de surcharge élevée, comportant un induit sans fer et un stator à aimantation permanente.

3. Système d'entraînement électromécanique de précision à commande numérique suivant la revendication 1, caractérisé en ce que, dans le cas d'un mouvement de rotation, la roue dentée centrale (3) est en une seule pièce avec l'arbre moteur servant d'arbre de sortie (4).

4. Système d'entraînement électromécanique de précision à commande numérique suivant la revendication 1, caractérisé en ce que, dans le cas d'un mouvement de translation, le moyeu de la roue dentée centrale (3) et l'arbre moteur (20) sont rendus solidaires l'un de l'autre par l'intermédiaire d'une pièce filetée (19).

5. Système d'entraînement électromécanique de précision à commande numérique suivant la revendication 4, caractérisé en ce que la pièce filetée (19) est un arbre à recirculation de billes, comportant une douille à billes, ou un engrenage épicycloïdal.

6. Système d'entraînement électromécanique de précision à commande numérique suivant l'une des revendications 1 à 5, caractérisé en ce que les arbres des moteurs, ou les pignons (2, 2') qui leur sont associés, sont disposés, à égale distance les uns des autres, suivant un cercle centré sur l'arbre moteur (20) de la roue dentée centrale (3), les cercles primitifs des pignons d'entraînement et de la roue dentée centrale étant tangents entre eux.

7. Système d'entraînement électromécanique de précision à commande numérique suivant la revendication 1, caractérisé en ce que la roue dentée centrale (3) est montée en butée axiale dans un châssis de base (9) solidaire du boîtier commun (16), de préférence dans des roulements à aiguilles.

8. Système d'entraînement électromécanique de précision à commande numérique suivant la revendication 1, caractérisé en ce que la roue dentée centrale (3) est montée en butée radiale, par rapport au châssis de base (9), dans un dispositif de raccordement d'appareil (15) et dans un couvercle (5).

9. Système d'entraînement électromécanique de précision à commande numérique suivant la revendication 1, caractérisé en ce que, dans le cas d'un mouvement de translation de l'arbre moteur (20), la rotation de celui-ci est empêchée par un dispositif de blocage en rotation (21).

10. Système d'entraînement électromécanique de précision à commande numérique suivant la revendication 1, caractérisé en ce que, dans le cas d'un mouvement simultané de rotation et de translation, l'arbre moteur (20) est constitué de deux parties qui sont reliées entre elles d'une manière coulissante par l'intermédiaire d'un accouplement à friction (42).

FIG.1

FIG.2

# FIG.3

# FIG.4

# FIG.5

# FIG.6

# FIG.9

# FIG. 7

# FIG. 8

# FIG.10

# FIG.11

NETZ

STEUERELEKTRONIK

STROM /
SPANNUNGS-
REGELUNG

EP 0 211 000 B1

FIG.12

NETZ ⟋90

SPANNUNGSVERSORGUNG
REGELUNG ⟋92

LEISTUNGSELEKTRONIK

RECHNER

MESS-,STEUER-,REGEL-
ELEKTRONIK
FUNKTIONSWAHL

ANZEIGE

ANALOGE  DIGITALE
ELEKTRONISCHE POSITIONIERUNGS-
SYSTEME, KOMPARATORE

SCHNITTSTELLE

SAMMELLEITUNG

REGISTRIER-
GERÄTE

SCHREIBER

| A | B | C | D | E | +V | 0 |

DATENÜBERTRAGUNG (KABEL MIT STECKER)
87⟋ OPTO, FUNK, ULTRASCHALL ETC.

# FIG.13

GERÄTEDOSE
FIG.2 POS.31

| A | B | C | D | E | +V | 0 |

MOTOR

LEISTUNGS-
ELEKTRONIK
AKMULATOR

DATENEINGANG
FUNKTIONSER-
KENNUNG
ALARMLOGIK

1⟋

10

POSITIONS-
ERFASSUNGS-
SYSTEME

FUNKTIONSÜBERWACHUNG
MESSWERTERFASSUNG
SENSOREN

20

# FIG.14

71

72

FIG.15